## Europäisches Patentamt

## European Patent Office

## Office européen des brevets

(19)

(11) Veröffentlichungsnummer: **0 059 315**
**B1**

(12) **EUROPÄISCHE PATENTSCHRIFT**

(45) Veröffentlichungstag der Patentschrift:
**19.06.85**

(21) Anmeldenummer: **82100534.5**

(22) Anmeldetag: **27.01.82**

(51) Int. Cl.⁴: **F 23 J 15/00, B 01 D 50/00**

(54) **Vorrichtung zum Trennen von Schwebstoffen, wie Asche od. dgl. aus Rauchgasen.**

(30) Priorität: **26.02.81 DE 3107226**

(43) Veröffentlichungstag der Anmeldung:
**08.09.82 Patentblatt 82/36**

(45) Bekanntmachung des Hinweises auf die Patenterteilung:
**19.06.85 Patentblatt 85/25**

(84) Benannte Vertragsstaaten:
**AT BE CH FR GB IT LI LU NL SE**

(56) Entgegenhaltungen:
**WO - A - 80/02651**
**DE - C - 521 682**
**DE - C - 556 179**
**GB - A - 1 534 019**
**GB - A - 2 019 244**
**US - A - 3 716 967**
**US - A - 3 925 044**

(73) Patentinhaber: **AZO-Maschinenfabrik Adolf Zimmermann GmbH, Rosenbergerstrasse, D-6969 Osterburken (DE)**

(72) Erfinder: **Zimmermann, Adolf, Rosenbergerstrasse 28, D-6960 Osterburken (DE)**
Erfinder: **Link, Otmar, Kirchweg 14, D-6967 Buchen-Götzingen (DE)**

(74) Vertreter: **Dr.-Ing. Hans Lichti Dipl.-Ing. Heiner Lichti Dipl.-Phys. Dr. Jost Lempert, Postfach 41 07 60 Durlacher Strasse 31, D-7500 Karlsruhe 41 (DE)**

## Beschreibung

Die Erfindung betrifft eine Vorrichtung zum Trennen von Schwebstoffen, wie Asche od. dgl., aus Rauchgasen, bestehend aus einem zyklonartigen Grobabscheider, einem Schwebstoffsammelbehälter, einem nachgeschalteten Feinabscheider und einem Abzugskamin für das gereinigte Rauchgas, in welcher der Grobabscheider, der Sammelbehälter, der Feinabscheider und der Abzugskamin zu einer Baueinheit zusammengefaßt sind.

Solche Vorrichtungen werden insbesondere im Zusammenhang mit industriellen Feststoff-Feuerungen benötigt und dienen dazu, das Rauchgas soweit zu reinigen, daß die zulässigen Emissionswerte für Schadstoffe nicht überschritten werden.

Bei einer bekannten Vorrichtung (US-A-3 716 967) der eingangs genannten Art ist ein säulenartiges, auf dem Boden stehendes Gehäuse vorgesehen, das in seinem unteren Teil den Grobabscheider bildet und in dessen oberem Teil der Feinabscheider eingesetzt ist. Auf dessen oberem Abschluß sitzt als Abzugseinrichtung ein Gebläse. Der Raum des Grobabscheiders ist über ein in ihn eintauchendes Steigrohr mit dem Feinabscheider verbunden. Der Sammelbehälter ist als Schublade in das Gehäuseunterteil eingeschoben. Hierdurch ergeben sich einerseits Dichtungsprobleme, da der Grobabscheider, in dem das Rauchgas in turbulenter Strömung umläuft und an der Schubladen-Öffnung vorbeiströmt. Auch ist der Raum des Grobabscheiders nach unten gegenüber dem Sammelbehälter nicht abgegrenzt, so daß das abgeschiedene Grobgut aufgewirbelt und in den Raum unterhalb der Schublade gelangen kann. Schließlich kann die Schublade, um bewegungsfähig zu bleiben, nur eine geringe Menge an Grobgut aufnehmen.

Bei einer anderen bekannten Vorrichtung (DE-C-556 179) ist in einem zyklonartigen Abscheider ein Naßfilter als Feinabscheider konzentrisch eingesetzt, während der Abzugskamin auf dem Gehäuse des Grobabscheiders sitzt. Ein eigentlicher Sammelbehälter ist nicht vorhanden, vielmehr werden Grob- und Feingut über getrennte konische Auslaufböden abgezogen. Bei diesem Stand der Technik ist unklar, wie die Vorrichtung getragen, d. h. die konstruktiven Massen und die Nutzlast aufgenommen werden.

Der Erfindung liegt die Aufgabe zugrunde, eine Vorrichtung der eingangs genannten Art so weiterzuentwickeln, daß eine konstruktiv einfache selbsttragende Baueinheit entsteht.

Diese Aufgabe wird erfindungsgemäß dadurch gelöst, daß der Sammelbehälter als Tragkonstruktion für sämtliche Bauteile der Baueinheit ausgebildet ist.

Mit der erfindungsgemäßen Ausbildung erhält der Sammelbehälter eine Doppelfunktion: Er dient einerseits als Auffangbehälter für sämtliche Schwebstoffe — Grob- und Feingut — andererseits als Tragkonstruktion für sämtliche Bauteile. Damit erübrigt sich eine separate Tragkonstruktion. Die Vorrichtung wird damit konstruktiv einfach. Es ergeben sich Material- und Kostenersparnis bei der Fertigung und montagetechnische Vorteile. Die Anlage läßt sich am Betriebsort leicht montieren und als in sich geschlossene, kompakte Baueinheit auch wieder umstellen. Der Sammelbehälter bildet den unteren Abschluß der Baueinheit und kann in seiner Größe problemlos an die im jeweiligen Bedarfsfall gegebene Gasleistung und den Schwebstoffanfall angepaßt werden.

Gemäß einem Ausführungsbeispiel der Erfindung ist der Grobabscheider als Zyklonrohr ausgebildet und im Zentrum des Sammelbehälters angeordnet, so daß sich die im Zyklonrohr abgeschiedenen Schwebstoffe gleichmäßig über den Querschnitt des Sammelbehälters verteilen. Die gesamte Anlage benötigt lediglich noch einen einfachen Ascheabzug.

Gemäß einem weiteren Ausführungsbeispiel der Erfindung ist der Feinabscheider konzentrisch um das Zyklonrohr angeordnet, wobei seine Gaseintrittsfläche höher als die Ausmündung des Zyklonrohres liegt.

Das Zyklonrohr dient nicht nur der Abscheidung der Schwebstoffe, sondern zugleich auch als Löschstrecke für glühende Schwebstoffe, um auf diese Weise zu verhindern, daß glühende Partikel in den Feinabscheider, der im allgemeinen aus Filtermaterial besteht, gelangen. Die Wirkung des Zyklonrohrs als Löschstrecke kann noch dadurch vergrößert werden, daß das Zyklonrohr einen nennenswert größeren Durchmesser als die einmündende Rauchgaszuleitung aufweist, also ein Durchmessersprung vorhanden ist, der zu einer Verzögerung der Rauchgasgeschwindigkeit führt. In Verbindung mit der schrauben- bzw. spiralförmigen Bewegung des Rauchgases im Zyklonrohr ergibt sich eine relativ große Verweilzeit der Schwebstoffe, so daß glühende Partikel auf dem Weg durch das Zyklonrohr weitgehend erlöschen.

Gemäß einer bevorzugten Ausführungsform ist der Abzugskamin auf dem Sammelbehälter in dessen Zentrum angeordnet und über Leitungen mit der Reingasseite des Feinabscheiders verbunden. Der Sammelbehälter dient also auch für den Kamin als Tragkonstruktion, wobei der Vorteil gegeben ist, daß sich die Emissionshöhe des Kamins aus der Höhe des Sammelbehälters und der absoluten Höhe des aufgesetzten Abzugskamins addiert. Da der Sammelbehälter ohnehin notwendig ist, wird beim Kamin an Bauhöhe bzw. konstruktivem Aufwand eingespart. Die vorgeschriebene Emissionshöhe des Kamins läßt sich demgemäß mit geringeren Kosten erreichen.

Mit Vorteil ist die Anordnung so getroffen, daß das Zyklonrohr die Decke des Sammelbehälters nach oben überragt und der Abzugskamin auf das Zyklonrohr aufgesetzt ist, wobei zwi-

schen beiden eine Trennwand angeordnet ist. Bei diesem Ausführungsbeispiel münden unmittelbar unterhalb der Trennwand die Rauchgaszuleitung in das Zyklonrohr und unmittelbar oberhalb der Trennwand die Reingasleitungen in Abzugskamin ein.

Schließlich können die Reingasleitungen radial am Sammelbehälter angesetzt und in einem Bogen nach oben und innen zum Abzugskamin geführt sein. Statt dessen kann natürlich auch eine direkte Verbindung zwischen dem Bereich des Sammelbehälters, in welchem der Feinabscheider untergebracht ist, und dem Abzugskamin vorgesehen sein.

Nachstehend ist die Erfindung anhand eines in der Zeichnung dargestellten Ausführungsbeispiels beschrieben. In der Zeichnung zeigt

Fig. 1 eine Seitenansicht der Vorrichtung und
Fig. 2 eine Draufsicht auf die Vorrichtung gemäß Fig. 1.

Die Vorrichtung besteht aus einem Schwebstoff-Sammelbehälter 1, einem Grobscheider 2, einem Feinabscheider 3 und einem Abzugskamin 4, die, wie die Zeichnung erkennen läßt, zu einer einzigen Baueinheit zusammengefaßt sind.

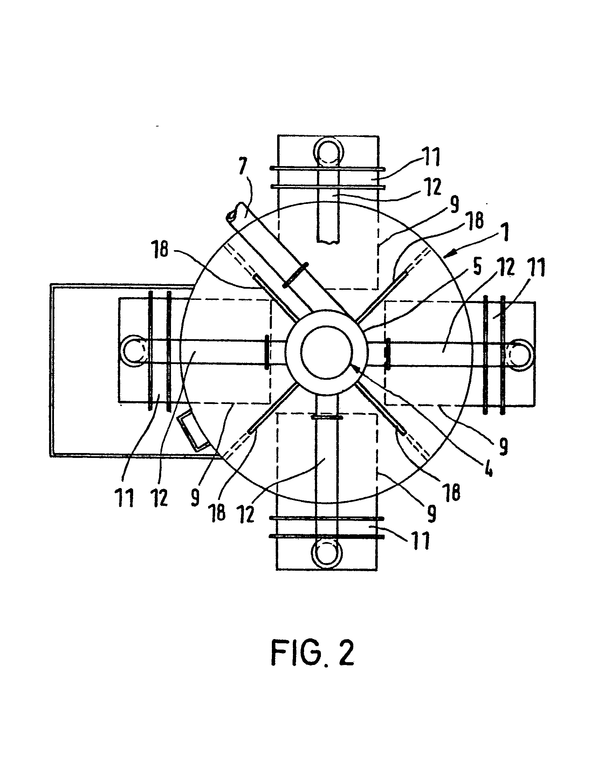

Der Grobabscheider 2 ist als Zyklonrohr 5 ausgebildet, das in die Decke des Behälters 1 eingesetzt ist. Im oberen Bereich des Zyklonrohrs 5 mündet eine Rauchgaszuleitung 7 etwa tangential ein (s. Fig. 2). Das Zyklonrohr 5 erstreckt sich im Zentrum des Sammelbehälters 1 über dessen oberen Bereich und ist an seiner unteren Stirnseite 8 offen. Es wird konzentrisch vom Feinabscheider 3 umgeben, der beim gezeigten Ausführungsbeispiel aus vier einzelnen Abscheidern 9, z. B. in Form von Filtertaschen, umgeben ist. Die Rauchgas-Eintrittsfläche 10 der Feinabscheider 3 liegt höher als die Öffnung 8 des Zyklonrohrs 5.

An die Reingasseite der Feinabscheider 3 ist über Sammelschächte 11 je eine Reingasleitung 12 angeschlossen, die über der Decke 6 des Sammelbehälters 1 bogenförmig in den Abzugskamin 4 geführt sind.

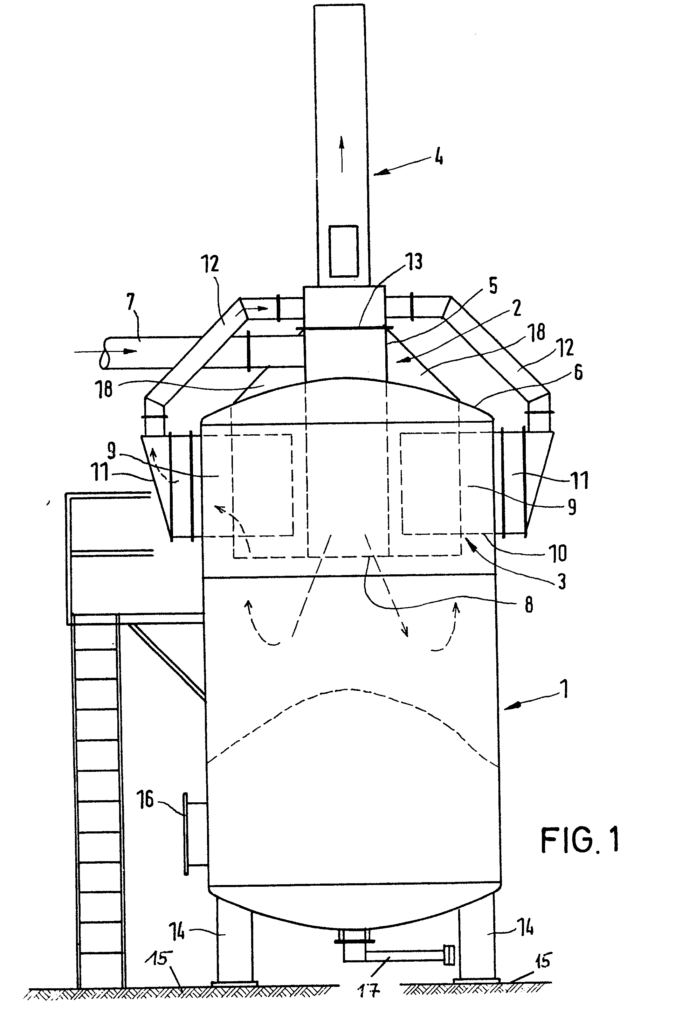

Wie aus Fig. 1 ersichtlich, überragt das Zyklonrohr 5 die Decke 6 des Sammelbehälters 1 nach oben. Auf diesen Abschnitt des Zyklonrohrs 5 ist der Abzugskamin 4 unmittelbar aufgesetzt, wobei zwischen beiden eine Trennwand 13 angeordnet ist. Unmittelbar unterhalb dieser mündet die Rauchgaszuleitung 7 in das Zyklonrohr 5, während unmittelbar oberhalb derselben die Reingasleitungen 12 in den Abzugskamin 4 hineingeführt sind.

Der Schwebstoff-Sammelbehälter 1 — damit die gesamte Baueinheit — steht über Füße 14 auf einem Fundament 15 und ist in seinem unteren Bereich mit einer Inspektionsöffnung 16 und einem Schwebstoffabzug 17 versehen.

Das zu reinigende Rauchgas gelangt über die Zuleitung 7 in das Zyklonrohr 5, wobei seine Geschwindigkeit aufgrund des Durchmessersprungs vermindert wird. Innerhalb des Zyklonrohrs 5 bewegt sich das Rauchgas schraubenförmig nach unten zur Austrittsöffnung 8. Auf diesem Wege werden die meisten Schwebstoffe abgeschieden und fallen aufgrund ihrer Schwerkraft auf den Boden des Sammelbehälters 1. Das Rauchgas wird hinter der Austrittsöffnung 8 um 180° umgelenkt und gelangt in die Feinabscheider 3. Auch bei dieser Umlenkung erfolgt eine weitere Abscheidung von Partikeln aus dem Rauchgas. Die Feinanteile der Schwebstoffe werden dann in den Feinabscheidern 3 zurückgehalten. Das gereinigte Rauchgas gelangt über die Sammelschächte 11 und die Reingasleitungen 12 in den Abzugskamin 4, dessen Emissionshöhe sich aus seiner Eigenhöhe und der Behälterhöhe ergibt.

Das Gewicht des Zyklonrohrs 5 und insbesondere des Abzugskamins 4 wird über Knotenbleche 18, die sternförmig angeordnet sind, in die Wandung des Sammelbehälters 1 eingeleitet und über die Stützfüße 14 in das Fundament 15 abgetragen. Bei besonders großer Bauhöhe des Abzugskamins 4 können die Stützfüße auch außenseitig am Mantel bis zur Decke 6 des Sammelbehälters 1 reichen, so daß das Gewicht unmittelbar über diese Stützfüße abgetragen wird.

Die Länge des Zyklonrohrs und die Rauchgas-Geschwindigkeit werden so bemessen, daß dann, wenn die Feinabscheider 3 aus brennbarem Werkstoff hergestellt sind, das Zyklonrohr 5 eine ausreichend lange Löschstrecke bildet. Die Feinabscheider 3 können weiterhin mit einer herkömmlichen Einrichtung zum Abreinigen versehen und im übrigen austauschbar am Sammelbehälter 1 angeordnet sein.

**Patentansprüche**

1. Vorrichtung zum Trennen von Schwebstoffen, wie Asche od. dgl., aus Rauchgasen, bestehend aus einem zyklonartigen Grobabscheider (2), einem Schwebstoff-Sammelbehälter (1), einem nachgeschalteten Feinabscheider (3) und einem Abzugskamin (4) für das gereinigte Rauchgas, in welcher der Grobabscheider (2), der Sammelbehälter (1), der Feinabscheider (3) und der Abzugskamin (4) zu einer Baueinheit zusammengefaßt sind, dadurch gekennzeichnet, daß der Sammelbehälter (1) als Tragkonstruktion für sämtliche Bauteile (2, 3, 4) der Baueinheit ausgebildet ist.

2. Vorrichtung nach Anspruch 1, dadurch gekennzeichnet, daß der Grobabscheider (2) als Zyklonrohr (5) ausgebildet und im Zentrum des Sammelbehälters (1) angeordnet ist.

3. Vorrichtung nach Anspruch 1 oder 2, dadurch gekennzeichnet, daß der Feinabscheider (3) konzentrisch um das Zyklonrohr (5) und seine Gas-Eintrittsfläche (10) höher als die Ausmündung (8) des Zyklonrohrs (5) angeordnet ist.

4. Vorrichtung nach einem der Ansprüche 1 bis 3, dadurch gekennzeichnet, daß das Zyklonrohr (5) einen nennenswert größeren Durchmesser als die einmündende Rauchgaszuleitung (7) aufweist.

5. Vorrichtung nach einem der Ansprüche 1 bis 4, dadurch gekennzeichnet, daß der Abzugskamin (4) auf dem Sammelbehälter (1) in dessen Zentrum angeordnet und über Leitungen (12) mit der Reingasseite des Feinabscheiders (3) verbunden ist.

6. Vorrichtung nach einem der Ansprüche 1 bis 5, dadurch gekennzeichnet, daß das Zyklonrohr (5) die Decke (6) des Sammelbehälters (1) nach oben überragt und der Abzugskamin (4) auf das Zyklonrohr (5) aufgesetzt ist, wobei zwischen beiden eine Trennwand (13) angeordnet ist.

7. Vorrichtung nach einem der Ansprüche 1 bis 6, dadurch gekennzeichnet, daß unmittelbar unterhalb der Trennwand (13) die Rauchgaszuleitung (7) in das Zyklonrohr (5) und unmittelbar oberhalb der Trennwand (13) die Reingasleitungen (12) in den Abzugskamin (4) münden.

8. Vorrichtung nach einem der Ansprüche 1 bis 7, dadurch gekennzeichnet, daß die Reingasleitungen (12) radial am Sammelbehälter (1) angesetzt und in einem Bogen nach oben und innen zum Abzugskamin (4) geführt sind.

## Claims

1. Device for the separation of suspended material such as ash or the like from flue gases, made up of a cyclone — like coarse separator (2), a collecting container (1) for the suspended material, a fines separator (3) placed downstream and an take-off stack (4) for the cleaned flue gas, in which the coarse separator, the collecting container (1), the fine separator (3) and the take-off stack (4) are combined to a structural unit, wherein the collecting container (1) is designed as a support structure for all the components (2, 3, 4) of the structural unit.

2. Device according to claim 1, wherein the coarse separator (2) is designed as a cyclone tube (5) and is arranged in the center of the collecting container (1).

3. Device according to claim 1 or 2, wherein the fines separator (3) is arranged concentrically round the cyclone tube (5), and the gas inlet area (10) of said fines separator (3) is arranged at a higher level than the discharge hole (8) of the cyclone tube (5).

4. Device according to anyone of claimes 1 to 3, wherein the cyclone tube (5) has a considerable greater diameter than the stack gas supply tube (7) opening into the cyclone tube.

5. Device according to anyone of claims 1 to 4, wherein said take-off stack (4) is arranged on the top of the collecting container (1) in the center thereof and is connected by ducts (12) to the center thereof and is connected by ducts (12) to the clean gas side of the fines separator (3).

6. Device according to anyone of claims 1 to 5, wherein the cyclone tube (5) projects over the top cover (6) of the collecting container (1) and the take-off stack (4) is mounted on said cyclone tube (5), having a separating wall (13) therebetween.

7. Device according to anyone of claims 1 to 6, wherein the flue gas supply tube (7) opens directly under the seperating wall (13) into the cyclone tube (5) and wherein the clean gas ducts (12) open directly above the separating wall into the take off stack (4).

8. Device according to anyone of claims 1 to 7, wherein the clean gas ducts (12) are placed radially into the collecting container (1) and are passed in a bend upwards and inwards to the take-off stack (4).

## Revendications

1. Dispositif destiné à séparer les substances en suspension, telles que les cendres, etc. dans des gaz brûlés, se composant d'un préséparateur de type à cyclone (2), d'un récipient collecteur des substances en suspension (1), d'un séparateur fin (3) monté en aval et d'une cheminée d'évacuation (4) des gaz épurés, dans lequel le préséparateur (2), le récipient collecteur (1), le séparateur fin (3) et la cheminée d'évacuation (4) sont regroupés en une unité modulaire, caractérisé en ce que le récipient collecteur (1) est conçu comme construction capable de supporter tous les composants (2, 3, 4).

2. Dispositif selon la revendication 1 caractérisé en ce que le préséparateur (2) est conçu comme tube de cyclone (5) et est disposé au centre du récipient collecteur (1).

3. Dispositif selon la revendication 1 ou 2 caractérisé en ce que le séparateur fin (3) est disposé concentriquement autour du tube du cyclone (5) et en ce que sa surface d'entrée des gaz (10) est placée au-dessus de la sortie (8) du tube du cyclone (5).

4. Dispositif selon l'une des revendications 1 à 3 caractérisé en ce que le tube du cyclone (5) présente un diamètre sensiblement supérieur à la conduite d'amenée des gaz brûlés (7) qui y débouche.

5. Dispositif selon l'une des revendications 1 à 4 caractérisée en ce que le cheminée d'évacuation (4) est disposée sur le récipient collecteur (1) et en son centre et est reliée via des conduites (12) au côté de la sortie des gaz épurés du séparateur fin (3).

6. Dispositif selon l'une des revendications 1 à 5 caractérisé en ce que le tube du cyclone (5) dépasse, sur le haut, de la couverture (6) du récipient collecteur (1) et en ce que la cheminée d'évacuation (4) est posée sur le tube du cyclone (5), une cloison (13) séparant ces deux composants.

7. Dispositif selon l'une des revendications 1 à 6 caractérisé en ce que la conduite d'amenée des gaz brûlés (7) débouche directement dans le tube du cyclone (5) sous la cloison (13) et en ce que les conduites de gaz épurés (12) débouchent dans la cheminée d'évacuation (4) directement au-dessus de la cloison (13).

8. Dispositif selon l'une des revendications 1 à 7 caractérisé en ce que les conduites des gaz épurés (12) sont placées radialement sur le récipient collecteur (1) et passent dans un coude menant vers le haut et l'intérieur de la cheminée d'évacuation (4).

FIG. 1

FIG. 2